# EUROPEAN PATENT SPECIFICATION

(11) **EP 1 765 576 B1**
(45) Date of publication and mention of the grant of the patent: **16.02.2011**
(21) Application number: 05767467.3
(22) Date of filing: 30.06.2005
(51) Int. Cl.: B29C 65/18, B29C 65/78, B31D 5/00

(54) **SEALING DEVICE FOR HEAT SEALING FILM MATERIAL**
SIEGELEINRICHTUNG ZUM HEISSSIEGELN VON FOLIENMATERIAL
DISPOSITIF D'ETANCHEITE DESTINE A UN MATERIAU D'ETANCHEITE EN FORME DE FILM

(30) Priority: 30.06.2004 NL 1026528
(43) Date of publication of application: 28.03.2007
(73) Proprietor: Ideepak Holding B.V., 6039 AP Stramproy (NL)
(72) Inventor: AQUARIUS, Pieter, Theodorus, Joseph, NL-6039 AC Stramproy (NL)
(74) Representative: van Loon, C.J.J.
(86) International application number: PCT/IB2005/002405
(87) International publication number: WO 2006/003524

(56) References cited:
- EP-A- 1 112 816
- DE-A1- 2 304 045
- DE-A1- 19 726 205
- FR-A- 2 054 233
- GB-A- 1 039 898
- NL-C2- 1 020 273
- US-A- 2 800 162
- US-A- 3 829 341
- US-A- 4 080 241
- US-A- 4 084 999
- US-A- 4 285 758
- US-A- 4 992 133
- US-A- 5 034 087
- US-A- 5 308 725
- US-A1- 2002 058 468
- US-A1- 2002 092 279
- US-A1- 2002 139 487

## Description

The invention relates to a device for heat-sealing film material. Such a device is known from Dutch patent NL1020273 (corresponding to US-A-2003 183346) of applicant, where it is used for filling bags formed in film material with air and then sealing them tight. The thus obtained air bags can be used as filling material in packages, to protect products received therein. To that end, the known device comprises an air supply unit, a sealing unit and conveying means for carrying the film along these processing units. The conveying means comprise two circulating belts, which are each guided along a guiding block and are driven by suitable driven rollers in opposite direction of circulation, so that film material can be carried along therebetween. Here, at least one of the guiding blocks is provided with heating means in the form of a sealing thread extending under the circulating belt. With this, the guiding block also junctions as a sealing block, in cooperation with the other guiding block, which can then function as a counter block or may itself be provided with a second heating element, so that the film material carried therealong can be heated two-sidedly.

An advantage of this known device is that in it, the conveying means and the sealing unit both utilize the same part, i.e. the guiding block which also functions as sealing block and therefore has a double function, resulting in a relatively simple, compact construction. However, a drawback is that the conveying means, in particular the guiding block, is sensitive to wear and that, as a result of this double function, this wear directly affects the sealing quality. Wear occurs in particular at the running surfaces of the guiding blocks and the driven rollers along which the circulating belts are guided. Due to this wear, the grip on these belts is reduced, so that they can drift sideways and run off the guiding block, resulting in deformed or derailed sealing seams. Moreover, this sideways drifting leads to additional wear to the belts which, as a result thereof, may for instance start fraying which, in turn, leads to additional wear of the driven rollers. This worsens the grip on the belts even more and one is caught in a vicious circle. What is more, the circulating belts drifting sideways leads to irregular pulling forces on the film during sealing, which weakens the sealing seams. Also, due to such irregular pulling forces, the film may start to crease. As the sealing unit is not designed for such a doubling of material thickness, this also results in a weaker sealing seam which, furthermore, does not look attractive. The wear of the circulating belts furthermore results in a shortened lifespan thereof, so that he belts have to be replaced frequently, with all associated inconvenience and costs.

The object of the invention is to provide a device of the type described hereinabove, wherein at least a part of the drawbacks of the known device is eliminated while maintaining the advantages thereof. In particular, the object of the invention is to provide a device wherein wear of the conveying provision and the negative effects to the feed-through of the film and the sealing quality ensuing therefrom are reduced.

A further object of the invention is to provide a device with which the lifespan of the circulating belts is lengthened.

The invention further contemplates providing a device with which formation of creases during transport of the film can be prevented.

These and further objects are at least partly achieved with a device according to the invention, characterized by the features of claim 1.

By subdividing the supporting block not only functionally but also physically in at least two parts, each part can be manufactured from a material most suited to the function of the respective part. Thus, for the different parts, a greater freedom of choice is obtained as to the choice in material to be used, and the choice of material can be geared to the different functions better, simply because the materials for each part have to meet fewer requirements.

The part functioning as sealing block, with the heating means included therein, is manufactured from plastic, a heat-resistant and heat insulating material. If the heating means comprise a resistance element, the material is preferably also electrically insulating. A suitable plastic is in particular Teflon.

The part functioning as guiding block, in particular a circulating surface of the supporting block, or at least a part thereof, is manufactured from metal thus a material with a low frictional coefficient, in order to facilitate movement of the conveying means therealong. Additionally, metal is wear-resistant and easy to process. A suitable metal is, in particular aluminum, which preferably has undergone a hardening treatment.

The parts functioning as guiding block are detachable so that they can be easily replaced without replacing the entire supporting block, for instance in case of wear (despite the use of wear-resistant material) or in order to adjust the material to specific conditions of use, such as the material of the conveying means, the conveying velocity, sealing temperature, etc.

It is noted that US 4 992 133 discloses an apparatus for use in processing composite material. The apparatus includes a heating section and a pressure and/or cooling section having a pressure surface useful in applying a force to the composite material. The apparatus comprises a take-up mandrel for to take up the composite material and a tape head. The tape head includes the heating section and the pressure section and a movable endless resilient belt. The pressure section and the heating section both include a body of ceramic. The heating section further comprises a heat conductive member of aluminium or beryllium which closes a lower end of a cavity formed in the body, which cavity encloses an induction heater. The body of the heating section comprises a curved guide surface for guiding the belt.

In an advantageous embodiment, a device according to the invention is characterized by the features of claim 4.

By designing the conveying means as circulating belts which extend on both sides of the film material and which carry the film material between them, direct contact between this film material and the heating means can be prevented and in this manner it can be avoided that the film material sticks to the heating means. To that end, the circulating belts can be manufactured from a suitable material which is heat-resistant and further, preferably, has good anti-stick properties such as, for instance, Teflon.

In a particularly advantageous embodiment, a device according to the invention is characterized by the features of claim 5.

By building the circulating belts up of at least two layers, the thickness of the belt and hence its lifespan can be considerably lengthened, since due to the greater thickness, the tensile stresses in the belt will decrease, at least if the tensile forces applied in use to the belt remain equal. Alternatively, the thickness of the belt can be increased by manufacturing it from one single, thicker layer of material. However, with the shape of the belt being closed upon itself, this leads to internal bending stresses. The fact is that with such a shape, the fibres located on the outside will have to stretch slightly, while, conversely, the fibres located on the inside will have to contract. This leads to internal stresses which threaten the lifespan. By building up the belt of several thin layers and by attaching these layers, in a condition closed upon themselves (bent) against each other, the differences in length mentioned will be "automatically", taken into account and the outer layer will "automatically" be somewhat longer than the inner layer.

By having the ends of the respective layers attached onto themselves in an overlapping manner, to mutually stagger, it is provided that if these attachments were to form weak spots (which has not appeared in practice) these weak spots will, in any case, be distributed along the belt.

Further, the overlapping ends are preferably thinned such, for instance by bevelling them locally, that together these ends, in overlapping condition, have the same thickness as the rest of the layer. Thus, local thickenings and any accelerated wear associated therewith are prevented.

Preferably, the edges of the different layers include an angle deviating from 90° with a longitudinal central axis of the respective layer. Such edges can offer a better resistance against bending forces acting, during use, on the belt than edges extending at right angles to said central axis and will hence come loose less rapidly which is beneficial to the lifespan of the belt.

In a further advantageous elaboration, a device according to the invention is characterized by the features of claim 9.

By providing the supporting blocks with a cover plate, the feed-through of the film material along the sealing unit can be improved even further. For instance, the cover plates can prevent the circulating belts from drifting sideways. Further, a slit formed between the facing edges of the cover plates can guide the film material even better when it is filled with air and sealed tight. As a result, the formation of, for instance, creases and high lateral forces on the seal to be formed, which can both be caused by a filling with air which is (too) high, can be suppressed.

In a particularly advantageous embodiment, it is preferred that the cover plates are provided with a lengthened leg. With it, the above-mentioned slit between the cover plates is, as it were, lengthened in upstream direction, so that the film can already be guided earlier, with all associated, above-mentioned advantages. It is preferred that to that end, the legs extend in the direction of the air inlet unit, more preferably in the direction of a knife thereof, so that the slit can make its favorable action felt from the moment the film is cut open by this knife and then, cut-open longitudinal edges are formed.

It is noted that such cover plates with lengthened legs can also be advantageously used in a sealing device without the limiting features of the preceding claims.

According to a further embodiment of the invention, the device is characterized by the features of claim 11.

Owing to such an air outflow opening running to a point, this can be placed close to the supporting blocks so that air (or different injecting medium) can be blown into the film bags until just before sealing them, resulting in a good filling.

In the further subclaims, further advantageous embodiments are described of a device according to the invention. In clarification, the device according to the invention will be further elucidated with reference to the drawing. In the drawing:
Fig. 1 shows in front view a sealing device according to the invention;
Fig. 2 shows, in top plan view, preconfigured film material, suitable to be filled with air and sealed tight, with a device according to Fig. 1;
Fig. 3 shows a cross-section along the line III-III of the set up shown in Fig. 2 provided with a bag filled with air;
Figs. 4A-C show in further detail a guiding block according to the invention, provided with two parts manufactured from different materials, in front, side and top view, respectively;
Fig. 5 shows, in further detail, a driven roller according to the invention;
Fig. 6 shows in perspective view a circulating belt formed from two layers; and
Figs. 7A, B show in front view an anti-crease provision according to the invention, in not-mounted and mounted condition.

In this description, identical or corresponding parts have identical or corresponding reference numerals. The device shown and the operation thereof will merely be explained in as far as required for a proper understanding of the invention. For a more detailed explanation, reference is made to the earlier mentioned patent NL 1020273 which belongs to applicant.

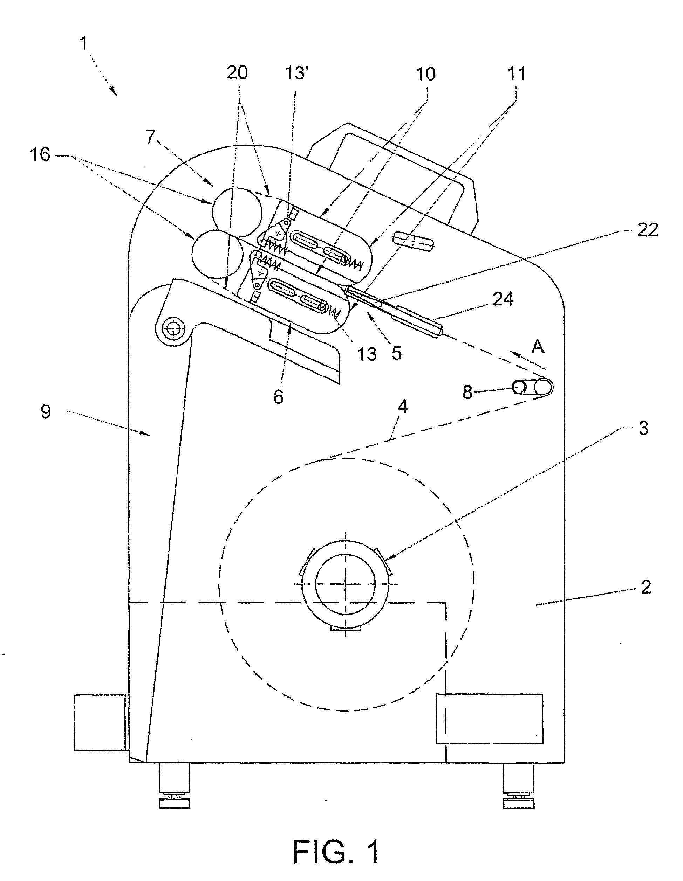

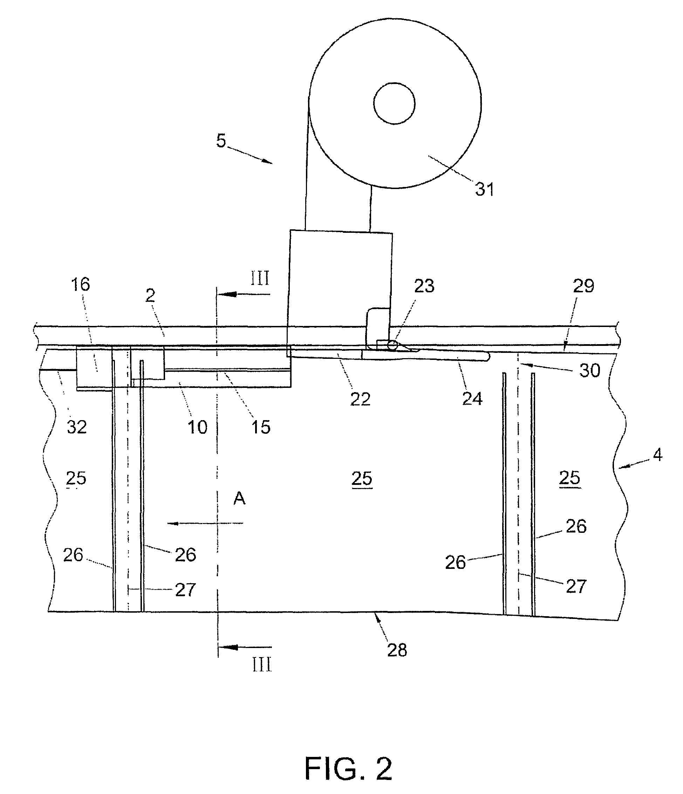

Fig. 1 shows, in front view, a sealing device 1 according to the invention, suitable for sealing film layers onto each other, for instance a film tube preconfigured with cross-seals as will be further explained on the basis of Fig. 2.

The device 1 comprises a housing 2, provided with a shaft 3 for receiving a roll of preconfigured film material 4 (represented in interrupted lines in Fig. 1). The device 1 further comprises an air supply unit 5, a sealing unit 6 and conveying means 7, designed for carrying the film material 4 from the roll along these processing units 5, 6. The housing 1 is further provided with a guiding provision 8 for guiding the film material 4 according to a desired path from the roll to the conveying means 7 and to meanwhile tighten it such that formation of creases is prevented or, at least limited. The device 1 further comprises a guiding plate 9, adjustably suspended in the housing 2, along which film material 4' filled with air can be carried out of the device 1.

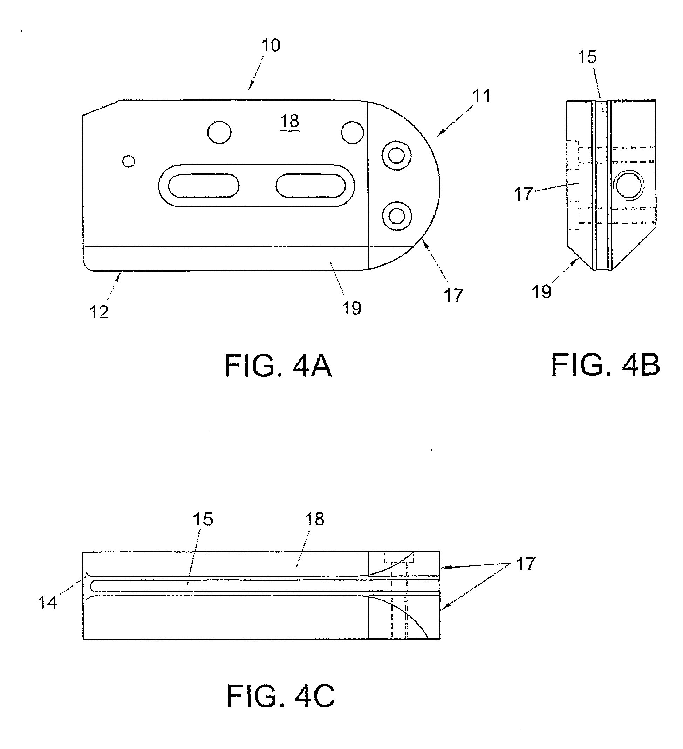

In the example shown, the sealing unit 6 comprises two substantially rectangular supporting blocks 10, which are each provided with a rounded short side 11. The supporting blocks 10, which are shown in further detail in Figs. 4A-C, are adjustably suspended in the housing 2 by means of first biasing means 13, lying side by side by a long side 12 at a short distance from each other, while the rounded sides 11 face the provided film material 4. Both supporting blocks 10 are provided with heating means 15, in the form of a sealing thread. This extends along a part of the supporting block circumference, in particular along the above-mentioned long side 12 and the rounded short side 11, in a groove 14 provided to that end as is more clearly visible in Figs. 4A-C. Here, second biasing means 13' are provided for tightening the sealing thread 15. Alternatively, only one of the supporting blocks may be provided with such heating means 15. In that case, the other supporting block can function as stop or counter block with which a particular counter pressure can be given when a seal is formed.

The rounded side 11 of the supporting blocks 10 serves for guiding, during use, a circulating belt 20 therealong and experiences considerable friction as a result thereof. That is why this side 11 is covered on both sides of the groove 14 with wear-resistant material 17, for instance aluminum, represented in hatching in Figs. 4A-C. The remaining part 18 of the supporting block 10, which supports the heating means 15 and hence serves mainly as a sealing block, is manufactured from a heat-resistant and preferably heat insulating material, for instance Teflon. It is further preferred that the longitudinal side 12 of the supporting block 10, at the front side in Fig. 1, is provided with a bevelled surface 19, as shown in Figs. 4A-C, for reasons to be clarified hereinafter.

The conveying means 7 comprise two circulating belts 20 closed upon themselves which are guided around the supporting blocks 10 and the heating means 15, and around two driven rollers 16, arranged behind the supporting blocks in the film feed-through direction.

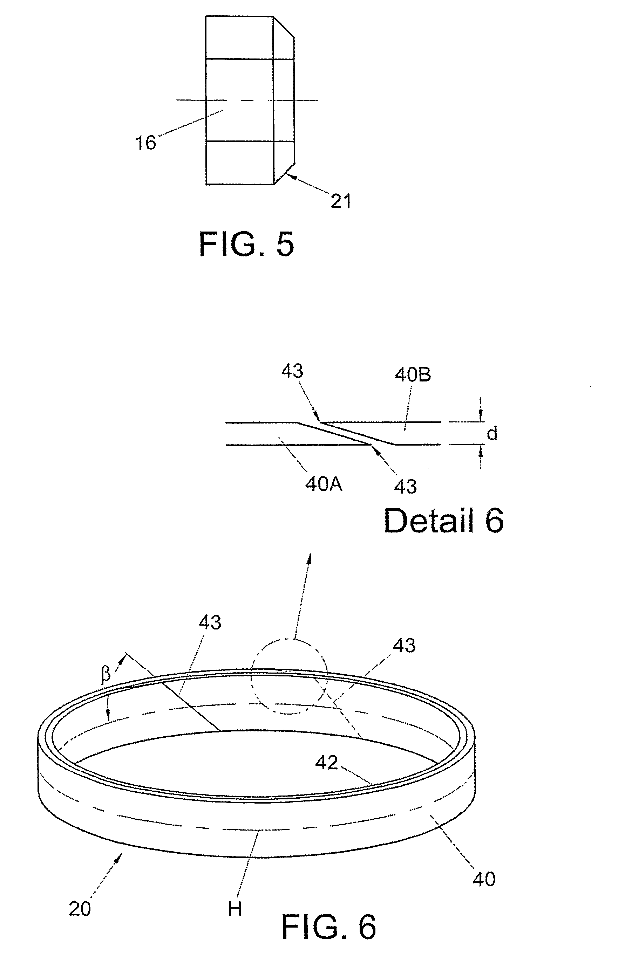

These driven rollers 16, one of which is shown in further detail in Figs. 5A, B, may be manufactured from plastic, preferably a temperature-proof plastic, for instance Silicone. The driven rollers 16 are preferably provided, at the front side in Fig. 1, with a bevel 21 comparable to the bevel 19 of the supporting block 10. In use, the driven rollers 16 are driven via drive means (not further shown) and, optionally, transmission means such that the circulating belts are driven in opposite circulating direction, the upper circulating belt in Fig. 1 circulating clock-wise and the lower circulating belt circulating counter-clockwise.

The air supply unit 5 comprises an air outflow opening 22 (see Fig. 1) which is connected to pumping means 31 (see Fig. 2) with which compressed air can be blown through the outflow opening 22. In film feed-through direction, the outflow opening 22 is situated just before the supporting blocks 10 and tapers slightly towards these supporting blocks 10 so that the opening 22 can approach the supporting blocks 10 closely. As a result, compressed air can be blown into the film bags up to the last moment, just before these are sealed tight between the supporting blocks 10. The air supply unit 5 further comprises a substantially rod-shaped guiding element 24 which is provided just before the outflow opening 22 with a knife 23 (see Fig. 2) the function of which will be further clarified.

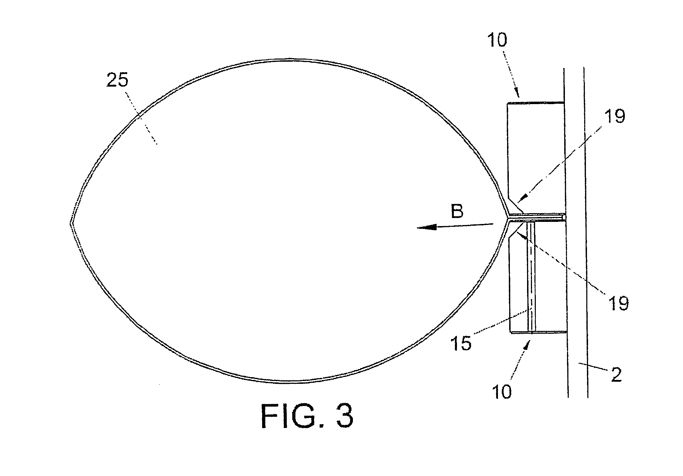

The operation of the apparatus 1 described above will now be explained with reference to Fig. 2. Here, in top plan view, film material 4 is shown, in particular tubular film material which, by means of cross seals 26 arranged at a regular mutual distance, is subdivided into bags 25 that, if desired, can be separated from each other by weakening lines 27 provided between successive cross seals 26. The cross seals 26 reach from a first longitudinal edge 28 of the tube film 4 to a point at a short distance from an opposite, second longitudinal edge 29, thereby leaving clear an opening 30. With this, the film can be slid over the guiding element 24 when the material 4 is fed through in the direction of arrow A. Here, longitudinal edge 29 is cut open by knife 23, whereupon, via the cut-open side, air is blown through the outflow opening 22 into the passing bag 25. This bag 25 will then puff up somewhat as is illustrated in Fig. 3. Due to the bevels 19 and 21 of the supporting block 10 and the guiding roller 16, respectively, the bag 25 can puff up more than would be the case without these bevels. Therefore, the bevels 19 and 21 contribute to achieving a higher degree of filling. Subsequently, the bag 25 filled with air passes the sealing unit 6 by which it is sealed tight. The orientation of the newly formed sealing seam 32 is then such that this seam and the cross seals 26 intersect so that a bag 25 closed on all sides is obtained, bounded by the longitudinal edge 28, the cross seals 26 and the newly formed sealing seam 32. If desired, when leaving the apparatus, the bags 25 can be separated from each other via guiding plate 9 by breaking the weakening lines 27, to then be used as filling material in packages. An advantage of such packaging material is that the preconfigured film webs 4 can be stored until used in relative compact form which takes up little space.

Fig. 6 shows in perspective view a possible embodiment of a circulating belt 20 , which is built up from several, in the case shown two, layers 40, 42. These layers 40, 42 are each provided with bevelled end faces 43 which include an angle β deviating from 90 degrees with their respective longitudinal central axes H. The layers 40, 42 are further provided with bevelled ends 40A, B, 42A, B so that in the attached, overlapping condition, these ends together have a thickness which is substantially equal to the thickness d of the rest of the layer 40, 42 as shown in detail 6B for the outer layer 40. Upon realisation of the belt 20, the respectively layers 40, 42 are attached against each other and themselves only after they have been brought to the position closed upon themselves shown in Fig. 6. Thus, when attaching the layers, the different required lengths can be taken into account by regulating the degree of overlap. For instance, the outer layer 40 will have to be somewhat longer than the inner layer 42. Thus, an endless belt closed upon itself can be formed which is substantially free of internal bending stresses and which can still have a sufficiently great thickness, with associated strength and lifespan.

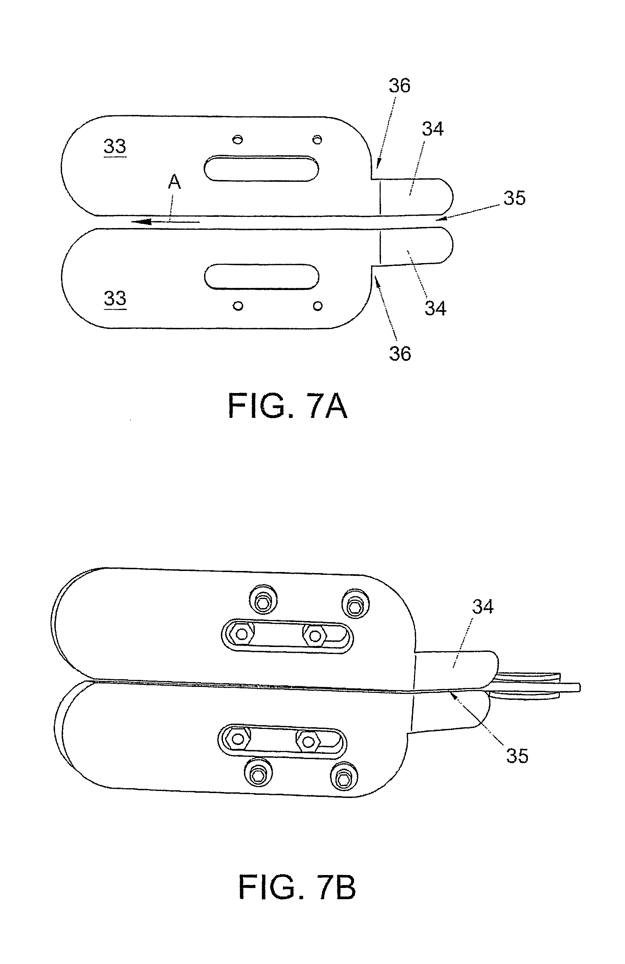

In Figs. 7A and B, a further part according to the invention is shown, in particular a cover plate 33, which can optionally be arranged on a sealing device according to the invention, in order to improve the feed-through of the film material along the air supply and sealing unit. Fig. 7A shows the cover plate 33 in unmounted condition, Fig. 7B in mounted condition, while the plate 33 is attached against a supporting block 10, thereby covering this supporting block 10 and the adjacent driven roller 16. This offers a number of advantages. For instance, the cover plate 33 can help prevent the circulating belt 20 from running off the supporting block 10 and/or the driven roller 16. Additionally, the cover plate 33 can help prevent, when the bags are being filled with air, that a great (too great) sideways force (transverse to the feed-through direction, as indicated by arrow B in Fig. 3) is applied to the seal to be formed for instance as a result of too great a filling, causing the seal to weaken. It will be clear that in this case, the above-mentioned bevels 19, 21 of the supporting block and the driven roller, respectively, can be omitted.

It is preferred that, at a side 36 upstream in feed-through direction A, each of the cover plates 33 is further provided with a sort of lengthened leg 34, which extend at a short distance from each other, thereby forming a guiding slit 35 with which the film can be guided even better and crease formation can be prevented even better. Preferably, the lengthened legs 34 reach adjacent the knife 23 or the rod-shaped guiding element 24, so that the slit 35 can actually assume the guiding function of the guiding element 24, which is particularly advantageous at the moment the film material 4 has passed the knife 23 and, therefore, is cut open. As a result, the cut open film edges can be effectively kept from, still, starting to undulate or crease.

The above-described features according to the invention all contribute to the reduction of wear to parts, cooperating in the transport of the film material, in particular the supporting blocks, the circulating belts and driven rollers. As a result, these parts not only have a longer lifespan, but also, a better feed-through of the film material is obtained, i.e. with less crease formation and improved control of forces acting on the film material during sealing which, eventually, contributes to a sealing connection of better quality.

The invention is not limited in any manner to the exemplary embodiments shown in the description and the drawing. Variations thereon are possible within the scope of the following claims.

## Claims

1. A device (1) for heat-sealing two layers of film material (4), comprising two supporting blocks (10) lying side by side, of which at least one supporting block (10) is provided with heating means (15) for heating the film material (4), the device further comprising conveying means (7) movable along this at least one supporting block (10) for carrying film material (4) along the heating means (15), wherein this at least one supporting block (10) comprises a first part (18) functioning as sealing block, which comprises the heating means (15) and a second part (17) functioning as guiding block for the conveying means (7), **characterized in that** the second part is detachable connected to the first part and **in that** the first part is manufactured from plastic, such that the first part is heat-resistant, preferably heat insulating, and the second part (17) is manufactured from metal, such that the second part is wear-resistant.

2. A device (1) according to claim 1, wherein the plastic of the first part (18) functioning as sealing block comprises Teflon.

3. A device (1) according to any one of the preceding claims, wherein the metal of the second part (17) functioning as guiding block comprises aluminum, preferably hardened aluminum.

4. A device (1) according to any one of the preceding claims, wherein the conveying means (7) comprise two circulating belts (2), designed for carrying film material (4) therebetween, the circulating belts (20) being designed as belts closed upon themselves, each manufactured from at least two layers of belt material (40, 42), which layers of belt material, in the position closed upon themselves, are attached against each other.

5. A device (1) according to claim 4, wherein the respective layers of belt material (40, 42) are attached against themselves with overlapping ends (40A,B; 42A, B) while, at the location of their overlap, these ends (40A, B; 42A, B) are bevelled such that together, in overlapping condition, they have a thickness (d) which is substantially equal to the thickness of the remaining layer (40, 42).

6. A device (1) according to claim 4 or 5, wherein the respective layers of belt materiel (40, 42), are attached against themselves by overlapping ends (40A,B; 42A,B) while, preferably, the overlapping attaching parts of the different layers (40, 42) lie mutually staggered.

7. A device (1) according to any one of claims 4-6, wherein, in attached condition, the end edges (43) of the respective layers of belt material (40, 42) preferably include an angle (β) deviating from 90 degrees with a central axis (H) of the belt (20).

8. A device (1) according to any one of claims 4-7, wherein at least the outer layer of belt material (40) and the inner layer of belt material (42) are manufactured from a heat-resistant and preferably anti-stick material, for instance Teflon, Nylon, Silicone et cetera.

9. A device (1) according to any one of the preceding claims, wherein the at least one supporting block (10) is covered by a cover plate (33) which is designed to screen off the conveying means (7) and to prevent sideways displacement thereof transverse to the film feed-through direction (A).

10. A device (1) according to claim 9, wherein both supporting blocks (10) are covered by a cover plate (33), which are each provided, at an upstream end (36) in film feed-through direction (A) with a lengthened leg (34) extending parallel at a short distance from each other while enclosing a guiding slit (35) for guiding, in use, the film material (4) carried through the device (1).

11. A device (1) according to any one of the preceding claims, **characterized in that** an air supply unit (5) is provided for the supply of air between the film layer (4) to be connected, which unit (5) comprises an air outflow opening (22) which, in film feed-through direction (A), is located upstream of the sealing unit (6) and tapers to a point in said film feed-through direction (A).

12. A device (1) according to claim 11, wherein the air supply unit (5) further comprises a substantially rod-shaped guiding element (24) and a knife (23), the rod-shaped guiding element (24) extending substantially counter to the film feed-through direction (A), upstream of the air outflow opening (22), while the knife (23) is arranged between the guiding element (24) and the air outflow opening (22).

13. A device (1) according to claims 10 and 12, wherein the lengthened legs (34) in the direction of the air supply unit (5), are bent relative to the cover plate (33) while preferably, the lengthened legs reach at least before the air outflow opening (22), more preferably as far as the knife (23) and most preferably as far as at least the rod-shaped guiding element (24).

## Patentansprüche

1. Vorrichtung (1) zur Heissversiegelung zweier Schichten Folienwerkstoff (4), wobei die Vorrichtung zwei nebeneinander angeordnete Stützblöcke (10) aufweist, wobei zumindest ein Stützblock (10) mit einer Heizvorrichtung (15) zum Aufheizen bzw. Erwärmen des Folienwerkstoffs (4) ausgestattet ist, wobei die Vorrichtung des Weiteren eine Transportvorrichtung (7) aufweist, welche entlang des mindestens einen Stützblocks (10) verfahrbar bzw. verschiebbar ist, um Folienwerkstoff (4) entlang der Heizvorrichtung (15) mitzuführen, wobei der mindestens eine Stützblock (10) einen ersten Abschnitt (18) aufweist, welcher als Versiegelungs- bzw. Abdichungsblock arbeitet bzw. wirkt, der die Heizvorrichtung (15) aufweist, sowie einen zweiten Abschnitt (17), welcher als Führungsblock für die Transportvorrichtung (7) arbeitet bzw. wirkt, **dadurch gekennzeichnet, dass** der zweite Abschnitt lösbar mit dem ersten Abschnitt verbunden ist und dass der erste Abschnitt aus Kunststoff hergestellt ist, so dass der erste Abschnitt hitzebeständig, vorzugsweise wärmedämmend ist, und dass der zweite Abschnitt (17) aus Metall hergestellt ist, so dass der zweite Abschnitt verschleißfest ist.

2. Vorrichtung (1) nach Anspruch 1, **dadurch gekennzeichnet, dass** der Kunststoff des als Versiegelungs- bzw. Abdichtungsblock wirkenden ersten Abschnitts (18) Teflon aufweist.

3. Vorrichtung (1) nach einem der vorhergehenden Ansprüche, **dadurch gekennzeichnet, dass** das Metall des als Führungsblock wirkenden zweiten Abschnitts (17) Aluminium, vorzugsweise gehärtetes Aluminium, aufweist.

4. Vorrichtung (1) nach einem der vorhergehenden Ansprüche, **dadurch gekennzeichnet, dass** die Transportvorrichtung (7) zwei zirkulierende bzw. umlaufende Riemen (2) aufweist, welche zum Transport von Folienwerkstoff (4) dazwischen konstruiert sind, wobei die zirkulierenden bzw. umlaufenden Riemen (20) als in sich geschlossene Riemen konstruiert sind, wobei jeder Riemen aus mindestens zwei Schichten Riemenwerkstoff (40, 42) hergestellt ist, wobei die Schichten aus Riemenwerkstoff in der in sich geschlossenen Position gegeneinander fixiert sind.

5. Vorrichtung (1) nach Anspruch 4, **dadurch gekennzeichnet, dass** die jeweiligen Schichten von Riemenwerkstoff (44, 42) mit überlappenden Enden (40A, B; 42A, B) gegeneinander fixiert sind, wobei diese Enden (40A, B; 42A, B) an der Stelle ihrer Überlappung derart abgeschrägt bzw. abgekantet sind, dass sie zusammen im Überlappungszustand eine Dicke (d) aufweisen, welche im Wesentlichen identisch zur Dicke der verbleibenden Schicht (40, 42) ist.

6. Vorrichtung (1) nach Anspruch 4 oder 5, **dadurch gekennzeichnet**, das die jeweiligen Schichten aus Riemenwerkstoff (40, 42) durch überlappende Enden (40A, B; 42A, B) gegeneinander fixiert sind, wobei die überlappenden Fixier- bzw. Befestigungsabschnitte der unterschiedlichen Schichten (40, 42) vorzugsweise gegeneinander versetzt angeordnet sind.

7. Vorrichtung (1) nach einem der Ansprüche 4 bis 6, **dadurch gekennzeichnet, dass** die Endkanten (43) der jeweiligen Schichten von Riemenwerkstoff (40, 42) im Fixier- bzw. Befestigungszustand vorzugsweise einen Winkel (β) aufweisen, welcher von einer Mittelachse (H) des Riemens (20) 90 Grad abweicht.

8. Vorrichtung (1) nach einem der Ansprüche 4 bis 7, **dadurch gekennzeichnet, dass** die Außenschicht des Riemenwerkstoffs (40) und die Innenschicht des Riemenwerkstoffs (42) aus einem hitzebeständigen und vorzugsweise nichthaftenden Werkstoff wie beispielsweise Teflon, Nylon, Silikon usw. gebildet sind.

9. Vorrichtung (1) nach einem der vorhergehenden Ansprüche, **dadurch gekennzeichnet, dass** der mindestens eine Stützblock (10) durch eine Abdeckplatte (33) abgedeckt ist, welcher zur Abschirmung bzw. Abteilung der Transportvorrichtung (7) und zur Verhinderung einer seitlichen Verlagerung der Transportvorrichtung quer zur Folien-Durchführungsrichtung (A) ausgelegt ist.

10. Vorrichtung (1) nach Anspruch 9, **dadurch gekennzeichnet, dass** beide Stützblöcke (10) von einer Abdeckplatte (33) abgedeckt sind, wobei beide Stützblöcke an einem stromaufwärts gelegenen Ende (36) in Folien-Durchführungsrichtung (A) je einen verlängerten Abschnitt bzw. Schenkel (34) aufweisen, welche sich parallel in kurzem Abstand zueinander erstrecken, wobei sie im Einsatz einen Führungsschlitz (35) zur Führung des durch die Vorrichtung (1) transportierten Folienwerkstoffs (4) einschließen.

11. Vorrichtung (1) nach einem der vorhergehenden Ansprüche, **dadurch gekennzeichnet, dass** eine Luftversorgungseinrichtung (5) für die Zufuhr von Luft zwischen der zu verbindenden Folienschicht (4) vorgesehen ist, wobei die Einrichtung bzw. Einheit (5) eine Luftaustrittsöffnung (22) aufweist, welche in Folien-Durchführungsrichtung (A) stromaufwärts der Abdichtungseinheit (6) angeordnet ist und sich zu einer Spitze in der Folien-Durchführungsrichtung (A) hin verjüngt.

12. Vorrichtung (1) nach Anspruch 11, **dadurch gekennzeichnet, dass** die Luftversorgungseinrichtung bzw. -einheit (5) des Weiteren ein im Wesentlichen stabförmiges Führungsbauelement (24) sowie ein Messer (23) aufweist, wobei sich das stabförmige Führungsbauelement (24) im Wesentlichen entgegen der Folien-Durchführungsrichtung (A) stromaufwärts der Luftaustrittsöffnung (22) erstreckt, während das Messer (23) zwischen dem Führungsbauelement (24) und der Luftaustrittsöffnung (22) angeordnet ist.

13. Vorrichtung (1) nach Anspruch 10 und 12, **dadurch gekennzeichnet, dass** die verlängerten Abschnitte bzw. Schenkel (34) in Richtung der Luftversorgungseinheit (5) relativ zu der Abdeckplatte (33) gekrümmt sind, wobei die verlängerten Abschnitte bzw. Schenkel vorzugsweise zumindest bis vor die Luftaustrittsöffnung (22), vorzugsweise bis zu dem Messer (23) hin und am bevorzugtesten bis mindestens zu dem stabförmigen Führungsbauelement (24) hin reichen.

## Revendications

1. Dispositif (1) destiné à souder à chaud deux couches de matériau du type film (4), comprenant deux blocs de support (10) disposés côte à côte, dont au moins un bloc de support (10) est muni d'un moyen de chauffage (15) destiné à chauffer le matériau du type film (4), le dispositif comprenant en outre un moyen de transport (7) susceptible de se déplacer le long de cet au moins un bloc de support (10) en vue de transporter du matériau du type film (4) le long du moyen de chauffage (15) cet au moins un bloc de support (10) comprenant une première partie (18), fonctionnant en tant que bloc de soudage qui comprend le moyen de chauffage (15) et une deuxième partie (17) servant de bloc de guidage pour le moyen de transport (7), **caractérisé en ce que** la deuxième partie est connectée de façon détachable à la première partie et **en ce que** la première partie est fabriquée en une matière plastique, de telle manière que la première partie soit résistante à la chaleur, et soit de préférence, isolante de la chaleur, et **en ce que** la deuxième partie (17) est fabriquée en métal de telle manière que la deuxième partie soit résistante à l'usure.

2. Dispositif (1) selon la revendication 1, dans lequel la matière plastique de la première partie (18) servant de bloc de soudage est réalisée en Téflon.

3. Dispositif (1) selon l'une quelconque des revendications qui précèdent, dans lequel le métal de la deuxième partie (17) servant de bloc de guidage est constitué d'aluminium, de préférence d'aluminium durci.

4. Dispositif (1) selon l'une quelconque des revendications qui précèdent, dans lequel le moyen de transport (7) comporte deux courroies (2) qui se déplacent en continu et qui sont conçues pour transporter entre elles le matériau du type film (4), les courroies qui se déplacent en continu (20) étant conçues en tant que courroies fermées sur elles-mêmes, chacune étant fabriquée à partir d'au moins deux couches de matériau de courroies (40, 42), lesquelles couches de matériau de courroie sont fixées l'une contre l'autre, dans la position de fermeture sur elles-mêmes.

5. Dispositif (1) selon la revendication 4, dans lequel les couches respectives de matériau de courroie (40, 42) sont fixées l'une contre l'autre, leurs extrémités (40A, B ; 42A, B) se chevauchant, ces extrémités (40A, B ; 42A, B) étant biseautées à l'endroit où elles se chevauchent, de telle manière qu'ensemble, à l'état de chevauchement, elles ont une épaisseur (d) qui est sensiblement égale à l'épaisseur du reste de la couche (40, 42).

6. Dispositif (1) selon la revendication 4 ou 5, dans lequel les couches respectives de matériau de courroie (40, 42) sont fixées l'une contre l'autre par des extrémités (40A, B ; 42A, B) qui se chevauchent, les parties de fixation qui se chevauchent, des couches différentes (40, 42) étant de préférence décalées l'une par rapport à l'autre.

7. Dispositif (1) selon l'une quelconque des revendications 4 à 6 dans lequel, à l'état fixé, les bords d'extrémité (43) des couches respectives de matériau de courroie (40, 42) forment de préférence un angle (β) qui dévie de 90 degrés par rapport à l'axe central (H) de la courroie (20).

8. Dispositif (1) selon l'une quelconque des revendications 4 à 7, dans lequel au moins la couche extérieure de matériau de courroie (40) et la couche intérieure de matériau de courroie (42) sont fabriquées à partir d'un matériau résistant à la chaleur et de préférence anti-adhésif, par exemple du Téflon, du Nylon, du Silicone, etc.

9. Dispositif (1) selon l'une quelconque des revendications qui précèdent, dans lequel le bloc de support (10) au moins unique est recouvert d'une plaque de couverture (33) qui est conçue pour masquer le moyen de transport (7) et pour empêcher des déplacements latéraux de celui-ci, transversalement à la direction (A) de transport de film.

10. Dispositif (1) selon la revendication 9, dans lequel les deux blocs de support (10) sont recouverts par une plaque de couverture (33), lesquels blocs sont munis chacun à une extrémité amont (36), dans la direction de transport du film (A) d'une branche allongée (34), lesquelles branches s'étendent parallèlement à faible distance l'une de l'autre en enfermant une fente de guidage (35) destinée à guider, en cours d'utilisation, le matériau du type film (4) transporté dans le dispositif (1).

11. Dispositif (1) selon l'une quelconque des revendications qui précèdent, **caractérisé en ce qu'**un ensemble d'alimentation en air (5) est prévu pour fournir de l'air entre la couche de film (4) qui doit être connectée, lequel ensemble (5) comporte une ouverture de sortie d'air (22) qui, dans la direction (A) de transport de film, est située en amont de l'ensemble de soudage (6) et qui s'effile jusqu'à un point dans ladite direction (A) de transport de film.

12. Dispositif (1) selon la revendication 11, dans lequel l'ensemble d'alimentation en air (5) comporte en outre un élément de guidage (24) en forme de tige et un outil de coupe (23), élément de guidage (24) en forme de tige s'étendant substantiellement à l'opposé de la direction (A) de transport de film, en amont de l'ouverture de sortie d'air (22), l'outil de coupe (23) étant agencé entre l'élément de guidage (24) et l'ouverture de sortie d'air (22).

13. Dispositif (1) selon les revendications 10 et 12, dans lequel les branches allongées (34) dans la direction de l'ensemble d'alimentation en air (5) sont courbées par rapport à la plaque de couverture (33), tandis que, de préférence, les branches allongées s'étendent au moins jusque devant l'ouverture (22) de sortie d'air, plus préférablement jusqu'à l'outil de coupe (23) et le plus préférablement jusqu'à au moins l'élément de guidage (24) en forme de tige.
